# FASCICULE DE BREVET EUROPEEN

(11) **EP 3 221 138 B1**
(45) Date de publication et mention de la délivrance du brevet: **12.08.2020**
(21) Numéro de dépôt: 15805404.9
(22) Date de dépôt: 18.11.2015
(51) Int. Cl.: B29D 22/02, B32B 5/02, B32B 5/18, B32B 7/08, B32B 7/12, B32B 9/02, B32B 9/04, B32B 27/06, B32B 27/12, B32B 37/12, B64B 1/08, B64B 1/40

(54) **STRUCTURE GONFLABLE AVEC PEAU ETANCHE MULTICOUCHE ET PROCÉDÉS DE RÉALISATION DE CELLE-CI**
AUFBLASBARE STRUKTUR MIT EINER ABGEDICHTETEN MEHRSCHICHTIGEN HAUT UND HERSTELLUNGSVERFAHREN DAVON
INFLATABLE STRUCTURE WITH A MULTILAYER TIGHT SKIN AND MANUFACTURING PROCESSES THEREOF

(30) Priorité: 20.11.2014 FR 1461234
(43) Date de publication de la demande: 27.09.2017
(73) Titulaire: AIRBUS (SAS), 31700 Blagnac (FR)
(72) Inventeur: ABISROR, Albert, 92100 Boulogne Billancourt (FR); MESNAGE, Didier, 92210 Saint Cloud (FR)
(74) Mandataire: Gicquel, Olivier Yves Gérard
(86) Numéro de dépôt international: PCT/EP2015/077007
(87) Numéro de publication internationale: WO 2016/079202

(56) Documents cités:
- EP-A1- 2 047 971
- WO-A1-2015/089359
- LU-A1- 67 960
- US-A1- 2007 128 963

## Description

### Domaine de l'invention

La présente invention concerne les structures souples gonflables destinées à être pressurisées et elle a pour but de réaliser notamment des poutres, des mâts porteurs de panneaux solaires, de voiles d'aérofreinage ou de réflecteurs d'antennes pour des satellites et éventuellement des éléments de cadres de structure d'enveloppes de dirigeables, ballons météo ou toute autre réalisation dont la légèreté est une caractéristique primordiale.

La présente invention concerne dans ce cadre une peau étanche multicouche pour structure souple pressurisée et une structure souple utilisant une telle peau.

### Arrière plan technologique

Pour déployer de grandes structures gonflables il est connu notamment des documents US5311706A et WO2007/096289 A de réaliser des mâts porteurs gonflables et pressurisés.

Les contraintes pour les éléments de structure pour les dispositifs à déployer sont d'obtenir une rigidité suffisante sous pressurisation sans risques de déchirure tout en minimisant au maximum la masse de ces éléments et le volume pris par ceux-ci dégonflés.

Dans la réalisation actuelle de poutres gonflables plusieurs films assurant l'étanchéité de la poutre sont collés les uns aux autres. La plupart des encollages des films assurant l'étanchéité sont réalisés sur les faces extérieures de la poutre gonflable. Ainsi, lorsque l'on applique une forte pression interne, un décollement de ces films peut se produire et conduire à des défauts d'étanchéité. Cela implique une perte de rigidité de la poutre souple au cours du temps allant jusqu'à l'effondrement de celle-ci.

Il existe à ce jour plusieurs techniques qui permettent d'assurer l'étanchéité des structures gonflables :
- La pulvérisation interne d'une solution polymère sur le tissu de renfort;
- L'encollage d'un film sur la face extérieure d'un tissu de renfort;
- La réalisation de structures souples armées par procédés de compression / vulcanisation (pneumatiques) et les procédés dérivés;

La première solution ne permet pas d'avoir un résultat satisfaisant. En effet, la pulvérisation est difficilement homogène sur toute la surface (présence de micro-trous et de surplus de polymère par endroits). Cette technique n'assure donc pas une bonne étanchéité et conduit de plus à un poids assez élevé de la structure réalisée.

La deuxième solution consiste à encoller un film sur un tissu de renfort en face interne de la poutre. L'encollage de deux matières différentes n'est pas très aisé ce qui rend cette technique difficile à mettre en œuvre. De plus, cet encollage est effectué sur la face extérieure de la poutre et ainsi, lors de l'application d'une pression assez élevée, le film peut se décoller du tissu.

Le document US2007/128963 concerne des matériaux composites constitués d'un tissu textile sur lequel a été laminé un film flexible.

Le document LU 67 960 divulgue un procédé et un dispositif pour assurer la liaison durable par endroits de bandes ou feuilles de matériau gommées pour fabriquer des objets gonflables. LU 67 960 divulgue en particulier un élément de structure gonflable comportant deux peaux étanches multicouches comprenant chacune un film polymère et un tissu de renfort disposé sur le film, dans lequel lesdites peaux sont espacées pour former les parois externes de l'élément de structure pour lequel le film polymère de chacune des peaux forme une face interne de la paroi externe de l'élément de structure.

Le document EP2047971 propose un procédé de fabrication d'une structure de poutre porteuse creuse en matériau composite renforcé de fibres comprenant des étapes de préparation d'une première superposition d'une première pluralité de couches et d'une deuxième superposition d'une seconde pluralité de couches.

Enfin, on connait du document WO2015/089359 un système de toiture collé comprenant un substrat de toit, une membrane thermoplastique comprenant au moins une couche qui comprend un polymère thermoplastique fonctionnalisé et un adhésif fixant la membrane au substrat, où l'adhésif comprend un résidu durci d'un polymère.

Un des objectifs de la présente invention est donc de minimiser, et au mieux supprimer, les problèmes liés à l'étanchéité de la structure gonflable dus au décollement des films. Ceci permet de maintenir constante la rigidité d'une structure souple en fonction du temps et ainsi d'augmenter sa durée de vie. De plus, la présente invention permet de réaliser un encollage film/film, ce qui est plus aisé qu'un encollage film / tissu de renfort.

### Brève description de l'invention

Dans ce cadre, la présente invention concerne une structure de type poutre à section de forme quelconque, avec une peau étanche multicouche, composée de films polymère emprisonnant un tissu de renfort en fibres synthétiques notamment des fibres techniques telles que des fibres de carbone, aramide, polymère ou autres et permettant de rendre la structure portante par création d'un état précontraint après pressurisation interne. Ce type de poutre peut être intégré par exemple dans l'ossature d'éléments déployables de satellites afin d'en alléger la structure.

L'invention propose un élément de structure gonflable tel qu'une poutre gonflable selon la revendication 1.

L'élément comportant deux peaux étanches, celles-ci peuvent être reliées l'une à l'autre par des fils d'armure rigidifiant l'élément de structure.

Les fils d'armure relient avantageusement les premiers films des deux peaux au moyen d'une opération de piquage, les tissus de renfort des peaux recouvrant les boucles des fils en face externe des premiers films.

Les seconds films des peaux sont avantageusement collés sur les premiers films au travers des trous entre les mailles des tissus de renfort, les boucles du piquage étant noyées dans la colle entre les premiers et les seconds films.

L'invention propose en outre un procédé de réalisation d'un élément de structure gonflable selon l'invention qui comprend une étape de dépose de premiers films de part et d'autre d'un cœur solide extractible entre les deux films.

Le procédé comporte avantageusement une étape de piquage d'un fil d'armure à travers l'ensemble formé par les deux premiers films et le cœur solide. L'étape de piquage comprend éventuellement une étape d'ajout d'un fil de retenue pour bloquer les boucles d'un côté du piquage. Le fil d'armure a pour fonction d'assurer une retenue vis-à-vis de la pression qui s'exerce sur les parois internes de l'élément de structure et d'en maintenir l'écartement.

Le procédé comprend en outre avantageusement:
une étape de dépose d'un tissu de renfort à mailles espacées sur les faces externes des premiers films;
une étape de placement et d'encollage de seconds films avec les premiers films au travers des tissus de renfort, pour assurer l'étanchéité de la peau et une étape d'extraction du cœur solide sans destruction des fils d'armure.

Avantageusement, les tissus de renfort sont raccordés par points aux fils d'armure préalablement à la pose des seconds films.

Selon un premier mode de réalisation, le matériau du cœur solide est une mousse soluble à l'eau.

Avantageusement le matériau du cœur solide est une mousse à base d'amidon.

De manière alternative, le procédé de réalisation d'un élément de structure gonflable de l'invention comprend une étape de dépose de premiers films de part et d'autre d'un système de peignes.

Le procédé comporte préférablement une étape de piquage d'un fil d'armure à travers l'ensemble formé par les deux premiers films et les peignes.

Le précédé comporte avantageusement une étape de dépose d'un tissu de renfort à mailles espacées sur les faces externes des premiers films.

Pour améliorer la résistance de l'élément, le procédé comporte avantageusement une étape de placement et d'encollage de seconds films avec les premiers films au travers des tissus de renfort, pour assurer l'étanchéité de la peau.

Une étape d'extraction du peigne sans destruction des fils d'armure par rétraction des peignes, notamment l'un vers l'autre puis parallèlement aux films est ensuite prévue.

Les tissus de renfort sont avantageusement raccordés par points aux fils d'armure préalablement à la pose des seconds films.

Le procédé peut comporter, après piquage, une étape d'écartement des films l'un de l'autre au moyen du système de peigne.

De manière alternative, le procédé peut comporter, avant piquage, une étape d'écartement des films l'un de l'autre au moyen du système de peigne.

### Brève description des dessins

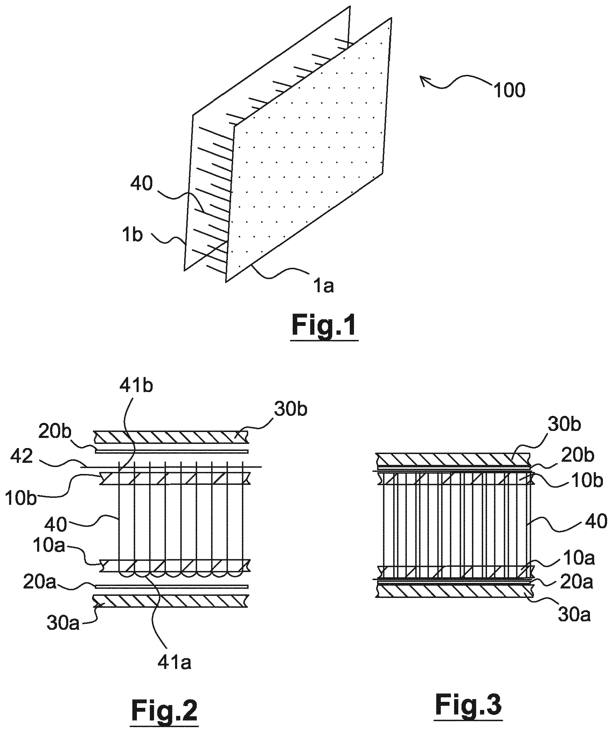

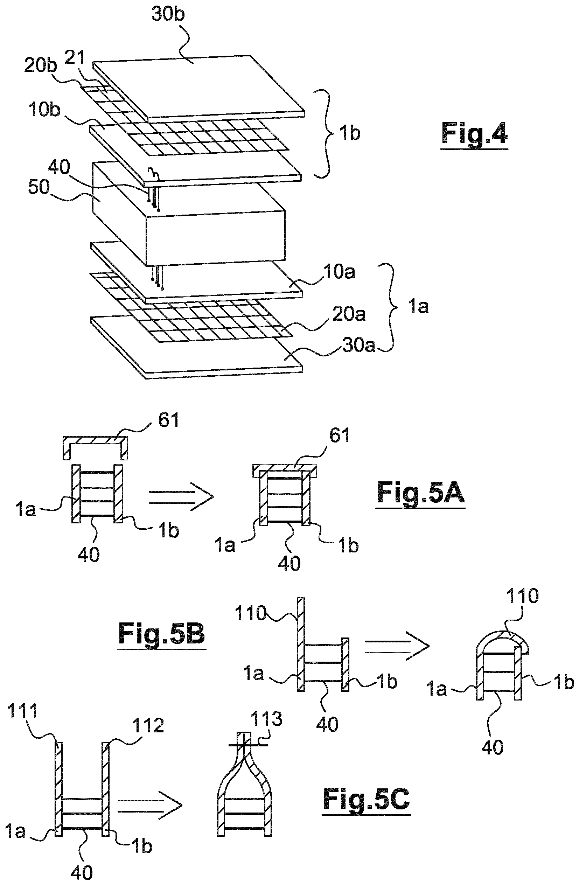

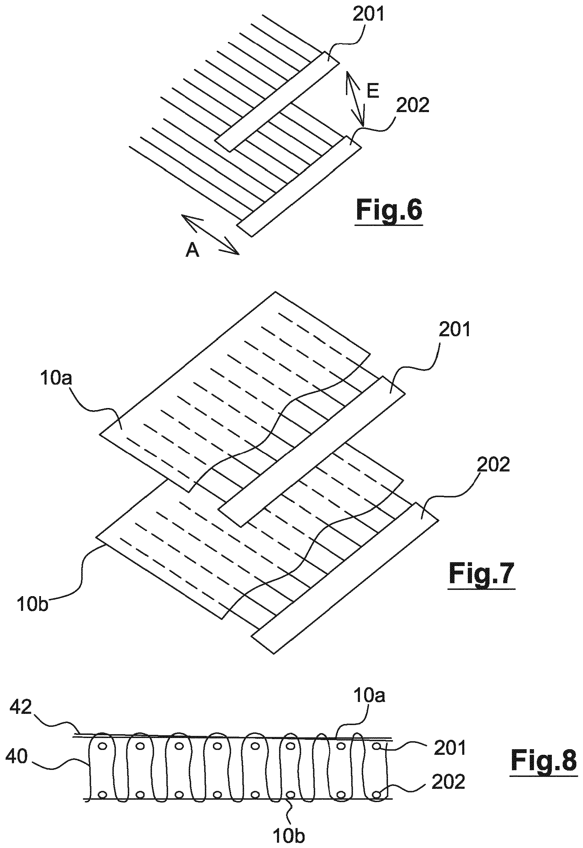

D'autres caractéristiques et avantages de l'invention seront apparents à la lecture de la description qui suit d'un exemple non limitatif de réalisation de l'invention en référence aux dessins qui représentent:
En figure 1: une vue schématique en perspective d'un élément de structure gonflable de l'invention;
En figure 2: une vue de côté coupe en éclaté d'un élément de structure gonflable de l'invention;
En figure 3: l'élément de structure de la figure 2 assemblé;
En figure 4: l'élément de structure de la figure 2 en perspective éclaté;
Aux figures 5A à 5C: des vues schématiques de côté en coupe de méthodes de terminaison d'un élément de structure de l'invention;
En figure 6: une vue schématique d'un système de peignes selon une variante de l'invention;
En figure 7: une vue schématique en perspective de la pose de films sur le système de la figure 6;
En figure 8: une vue de face d'une étape de piquage de fils d'armure utilisant le système de peignes de la figure 6.

### Description détaillée de modes de réalisation de l'invention

La figure 1 représente en perspective un élément de structure de l'invention sous forme dune poutre souple qui comporte deux peaux étanches 1a, 1b reliées par des fils d'armure 40 qui donnent sa raideur à la poutre.

Le rôle des films d'armure 40 est de permettre à la structure de résister à la pression interne, en maintenant une distance constante localement.

Selon cet exemple, les peaux sont parallèles et tenues à distance par les fils d'armure lorsque l'intérieur de la poutre est pressurisé mais il est possible, en faisant varier la longueur des fils d'armure selon leur position à la surface des peaux, de réaliser des poutres munies de renflements ou rétrécissements, ou de réaliser des poutres de section variable ou de forme incurvée.

La figure 2 représente les divers éléments constitutifs de l'élément de structure. Cet élément comporte les deux peaux 1a, 1b de la figure 1 espacées pour former les parois externes de l'élément. Chaque peau comporte un premier film polymère 10a, 10b. Les premiers films polymères 10a, 10b se situent côté interne des parois de l'élément de structure.

Les peaux comportent en outre un tissu de renfort 20a, 20b qui est disposé sur le premier film polymère.

Pour terminer les peaux un second film polymère 30a, 30b est collé sur le tissu de renfort et forme la surface externe des deux côtés de la poutre.

Cette structure réalise une structure de paroi sandwich avec un film intérieur et un film extérieur enserrant un tissu de renfort.

Le tissu de renfort est réalisé avec des fibres synthétiques de type fibres techniques telles que des fibres de carbone, aramide, polymère ou autre.

C'est en particulier un tissu à structure bidimensionnelle (2D).

Il est réalisé en sorte de comporter des mailles assez espacées pour laisser des vides entre mailles qui permettent un encollage entre le film intérieur et le film extérieur, les mailles 21 vues en figure 4 ont des dimensions adaptées en fonction de l'épaisseur du tissu de renfort, de la souplesse des films polymères et de la fluidité de la colle pour permettre un encollage entre les premier et second films.

Ainsi l'invention prévoit d'encoller un film en face intérieure de la paroi de la poutre et un film en face extérieure de la poutre en emprisonnant le tissu de renfort entre les deux films.

Cette structure a pour but d'améliorer l'étanchéité des poutres souples et ainsi leurs performances mécaniques et leur durée de vie.

Les avantages de cette solution sont notamment que la pression interne exercée sur la paroi constituée par la peau 1 est uniformément répartie sur le film intérieur et donc sur le tissu de renfort. En outre l'encollage film / film est un procédé parfaitement maîtrisé et le décollement du film extérieur est limité par l'encollage avec le film intérieur. Par ailleurs, ce procédé permet de maîtriser l'épaisseur de la membrane renforcée.

Selon les figures 2 et 3, Les films des faces internes des peaux sont reliés l'un à l'autre par des fils d'armure 40 grâce à une opération de piquage.

Une solution pour faciliter ce processus de piquage est de placer un cœur solide extractible entre les deux films pour en définir l'écartement.

Cette opération est effectuée comme suit :
a) Découpe d'un cœur solide poreux aux dimensions de la poutre;
b) Placement d'un film de polymère sur chacune des deux faces du cœur comme représenté en figure 4;
c) Piquage du fil d'armure à travers l'ensemble et ajout d'un fil de retenue 42 pour bloquer la boucle côté supérieur comme représenté en figure 2;
d) dépose d'un tissu en fibres synthétiques à mailles espacées 20a, 20b sur les films supérieur et inférieur. Selon les applications envisagées, le tissu peut éventuellement être raccordé par points à la couture précédente;
e) placement d'un second film 30a, 30b, pour assurer l'étanchéité, sur le tissu sur les faces supérieure et inférieure et encollage de ce film avec le film de la face interne comme représenté en figure 3, l'encollage du film interne et du film externe, séparés par le tissu, étant possible grâce à la présence de vides dans le tissu dus à l'espacement des mailles 21 ;
f) Extraction du cœur solide sans destruction des fils d'armure.

Un compromis entre surface d'encollage, la surface des vides, et les caractéristiques mécaniques du tissu peut être défini suivant le domaine d'utilisation de la poutre.

Les techniques utilisées pour l'encollage seront les mêmes que celles utilisées actuellement pour coller des films ensemble, soit grâce à de la colle, soit par chauffage-soudage.

Un exemple de réalisation du matériau du cœur solide est une mousse soluble à l'eau à base d'amidon. Une telle mousse est suffisamment résistante pour que le matériau sandwich ne s'effondre pas sous la pression du piquage et la pression d'encollage du film externe mais aussi suffisamment tendre pour permettre le passage des aiguilles.

D'autres méthodes pour fabriquer la peau son envisageables et notamment une variante à la solution du cœur solide extractible est la suivante : après couture reliant les deux faces sur une distance égale à l'épaisseur de la poutre, les deux films internes sont séparés par un système de peignes 201, 202, puis l'opération e) est appliquée.

Au niveau de la fermeture de la poutre, plusieurs solutions sont possibles:
- Le collage d'un couvercle 61 sur chaque bord représenté en figure 5A;
- L'encollage d'une peau 1a qui forme un rabat sur l'autre peau 1b représenté en figure 5B;
- L'encollage des extrémités 111, 112 des peaux 1a, 1b entre elles en figure 5C avec éventuellement une couture 113 des extrémités avant encollage des films.

L'assemblage bout à bout de plusieurs poutres de ce type permet de fabriquer une structure support ou squelette, par exemple afin de soutenir des éléments de structures déployables de satellites.

Un exemple de système de peignes est représenté schématiquement en figure 6, ledit système comprenant ici deux peignes 201, 202 mobiles l'un par rapport à l'autre en écartement E et pouvant se déplacer ensembles ou séparément dans leur plan selon la direction A des tiges des peignes.

Le procédé comprend dans ce cas une étape de dépose de premiers films 10a, 10b de part et d'autre du système de peignes comme représenté en figure 7 peignes écartés.

On réalise alors une étape de piquage d'un fil d'armure 40 à travers l'ensemble formé par les deux premiers films 10a, 10b et les peignes 201, 202. L'étape de piquage comprend éventuellement l'ajout d'un fil de retenue 42 pour bloquer les boucles d'un côté du piquage comme représenté en figure 8.

Le système de peigne est conçu pour que les dents ou tiges du peigne respectent le pas de piquage ou un multiple ou sous-multiple du pas de piquage.

Soit le système de peignes comporte deux peignes maintenus écartés à la distance correspondant à la poutre gonflée comme représenté et le piquage est fait avec les premier films en appui sur les peignes fils d'armure tendus, soit le piquage est fait avec des boucles lâches, les deux peignes étant d'abord rapprochés. Dans ce cas, une étape d'écartement des films l'un de l'autre est réalisée en écartant les peignes du système de peignes qui tendent les fis d'armure.

Comme pour le procédé à cœur solide, une étape de dépose d'un tissu de renfort à mailles espacées sur les faces externes des premiers films est réalisée peignes écartés.

Pour assurer l'étanchéité de la peau, on procède comme dans le cas du cœur solide au placement et à l'encollage de seconds films avec les premiers films au travers des tissus de renfort.

Enfin, on réalise une étape d'extraction du système de peignes sans destruction des fils d'armure par exemple en rapprochant les deux peignes puis en les retirant dans une direction parallèle à la surface des films.

Les tissus de renfort sont avantageusement raccordés par points aux fils d'armure préalablement à la pose des seconds films.

Une voilure gonflable, constituée d'un assemblage de poutres de l'invention gonflées, munie d'actionneurs en surface, permettant de modifier les caractéristiques aérodynamiques de la voilure, permettrait d'alléger sensiblement la structure d'un drone.

L'invention définie par les revendications n'est pas limitée aux exemples représentés et notamment la longueur des fils d'armure et leur pas peut être variable en fonction de leur emplacement entre les peaux.

## Revendications

1. Elément de structure gonflable (100) tel qu'une poutre gonflable comportant deux peaux étanches multicouches comprenant chacune un premier film polymère (10a, 10b), un tissu de renfort (20a, 20b) disposé sur le premier film polymère (10a, 10b) et un second film polymère (30a, 30b) disposé sur le tissu de renfort (20a, 20b) et collé au moyen d'une colle ou par chauffage-soudage sur le premier film polymère (10a, 10b) au travers de vides du tissu de renfort (20a, 20b) dans lequel lesdites peaux sont espacées pour former les parois externes de l'élément de structure pour lequel le premier film (10a, 10b) de chacune des peaux forme une face interne de la paroi externe de l'élément de structure et le second film (30a, 30b) de chacune des peaux forme une face externe de ladite paroi.

2. Elément de structure gonflable selon la revendication 1 pour lequel les deux peaux étanches (1a, 1b) sont reliées l'une à l'autre par des fils d'armure (40) rigidifiant l'élément de structure.

3. Elément de structure gonflable selon la revendication 2 pour lequel les fils d'armure (40) relient les premiers films (10a, 10b) des deux peaux au moyen d'une opération de piquage, les tissus de renfort des peaux recouvrant les boucles des fils (41a, 41b) en face externe des premiers films (10a, 10b).

4. Elément de structure gonflable selon la revendication 3 pour lequel les seconds films (30a, 30b) des peaux sont collés sur les premiers films (10a, 10b) au travers des vides entre les mailles des tissus de renfort (20a, 20b), les boucles du piquage étant noyées dans la colle entre les premiers et les seconds films.

5. Procédé de réalisation d'un élément de structure gonflable selon l'une quelconque des revendications 1 à 4 , le procédé comprenant :
une étape de dépose de premiers films (10a, 10b) de part et d'autre d'un cœur solide extractible (50) entre les deux films, une étape de déposer de tissus de renfort (20a, 20b) à mailles espacées sur les faces externes des premiers films ;
une étape de placement et d'encollage de seconds films (30a, 30b) avec les premiers films au travers des tissus de renfort, pour assurer l'étanchéité de la peau ;
une étape d'extraction du cœur solide (50).

6. Procédé de réalisation d'un élément de structure gonflable, pour lequel les deux peaux étanches (1a, 1b) sont reliées l'une à l'autre par des fils d'armure (40) rigidifiant l'élément de structure, selon la revendication 5, comportant une étape de piquage d'un fil d'armure (40) à travers l'ensemble formé par les deux premiers films (10a, 10b) et le cœur solide (50) entre l'étape de dépose des premiers films et l'étape de dépose des tissus de renfort, l'étape d'extraction du cœur solide se faisant sans destruction des fils d'armure.

7. Procédé de réalisation d'un élément de structure gonflable selon la revendication 6, pour lequel les tissus de renfort (20a, 20b) sont raccordés par points aux fils d'armure (40) préalablement à la pose des seconds films (30a, 30b).

8. Procédé de réalisation d'un élément de structure gonflable selon l'une quelconque des revendications 5 à 7 pour lequel le matériau du cœur solide est une mousse soluble à l'eau.

9. Procédé de réalisation d'un élément de structure gonflable selon la revendication 8 pour lequel le matériau du cœur solide est une mousse à base d'amidon.

10. Procédé de réalisation d'un élément de structure gonflable selon l'une quelconque des revendications 1 à 4, le procédé comprenant:
une étape de dépose de premiers films (10a, 10b) de part et d'autre d'un système de peignes (101, 102), une étape de dépose d'un tissu de renfort (20a, 20b) à mailles espacées sur les faces externes des premiers films ; une étape de placement et d'encollage de seconds films (30a, 30b) avec les premiers films au travers des tissus de renfort, pour assurer l'étanchéité de la peau ; une étape d'extraction du système de peignes par rétraction des peignes l'un vers l'autre puis parallèlement aux films.

11. Procédé de réalisation d'un élément de structure gonflable pour lequel les deux peaux étanches (1a, 1b) sont reliées l'une à l'autre par des fils d'armure (40) rigidifiant l'élément de structure, selon la revendication 10, comportant une étape de piquage d'un fil d'armure (40) à travers l'ensemble formé par les deux premiers films (10a, 10b) et les peignes; l'étape d'extraction du système de peignes se faisant sans destruction des fils d'armure.

12. Procédé de réalisation d'un élément de structure gonflable selon la revendication 11, pour lequel les tissus de renfort (20a, 20b) sont raccordés par points aux fils d'armure (40) préalablement à la pose des seconds films (30a, 30b).

13. Procédé de réalisation d'un élément de structure gonflable selon l'une quelconque des revendications 10 à 12, comportant après piquage, une étape d'écartement des films l'un de l'autre au moyen du système de peignes ;

14. Procédé de réalisation d'un élément de structure gonflable selon l'une quelconque des revendications 10 à 13, comportant, avant piquage, une étape d'écartement des films l'un de l'autre au moyen du système de peignes.

## Patentansprüche

1. Aufblasbares Strukturelement (100), wie etwa ein aufblasbarer Träger, welches zwei mehrschichtige dichte Häute aufweist, die jeweils einen ersten Polymerfilm (10a, 10b), ein Verstärkungsgewebe (20a, 20b), das auf dem ersten Polymerfilm (10a, 10b) angeordnet ist, und einen zweiten Polymerfilm (30a, 30b), der auf dem Verstärkungsgewebe (20a, 20b) angeordnet und mittels eines Klebstoffs oder durch Heißschweißen durch Lücken des Verstärkungsgewebes (20a, 20b) hindurch auf den ersten Polymerfilm (10a, 10b) geklebt ist, umfassen, wobei die Häute beabstandet sind, um die Außenwände des Strukturelements zu bilden, für welches der erste Film (10a, 10b) jeder der Häute eine Innenseite der Außenwand des Strukturelements bildet und der zweite Film (30a, 30b) jeder der Häute eine Außenseite dieser Wand bildet.

2. Aufblasbares Strukturelement nach Anspruch 1, wobei die zwei dichten Häute (1a, 1b) miteinander durch Bewehrungsdrähte (40) verbunden sind, die das Strukturelement versteifen.

3. Aufblasbares Strukturelement nach Anspruch 2, wobei die Bewehrungsdrähte (40) die ersten Filme (10a, 10b) der zwei Häute mittels eines Heftvorgangs verbinden, wobei die Verstärkungsgewebe der Häute die Schlingen der Drähte (41a, 41b) an der Außenseite der ersten Filme (10a, 10b) bedecken.

4. Aufblasbares Strukturelement nach Anspruch 3, wobei die zweiten Filme (30a, 30b) der Häute auf die ersten Filme (10a, 10b) durch Lücken zwischen den Maschen der Verstärkungsgewebe (20a, 20b) hindurch geklebt sind, wobei die Schlingen der Heftung in den Klebstoff zwischen den ersten und den zweiten Filmen eingebettet sind.

5. Verfahren zur Herstellung eines aufblasbaren Strukturelements nach einem der Ansprüche 1 bis 4, wobei das Verfahren umfasst: einen Schritt der Aufbringung erster Filme (10a, 10b) beiderseits eines herausziehbaren festen Kerns (50) zwischen den zwei Filmen, einen Schritt der Aufbringung von Verstärkungsgeweben (20a, 20b) mit beabstandeten Maschen auf die Außenseiten der ersten Filme;
einen Schritt der Anbringung von zweiten Filmen (30a, 30b) und ihrer Verklebung mit den ersten Filmen durch die Verstärkungsgewebe hindurch, um die Dichtigkeit der Haut sicherzustellen;
einen Schritt des Herausziehens des festen Kerns (50) .

6. Verfahren zur Herstellung eines aufblasbaren Strukturelements, wobei die zwei dichten Häute (1a, 1b) durch das Strukturelement versteifende Bewehrungsdrähte (40) miteinander verbunden sind, nach Anspruch 5, welches einen Schritt des Heftens eines Bewehrungsdrahtes (40) durch die von den zwei ersten Filmen (10a, 10b) und dem festen Kern (50) gebildete Anordnung hindurch zwischen dem Schritt der Aufbringung der ersten Filme und dem Schritt der Aufbringung der Verstärkungsgewebe aufweist, wobei der Schritt des Herausziehens des festen Kerns ohne Zerstörung der Bewehrungsdrähte durchgeführt wird.

7. Verfahren zur Herstellung eines aufblasbaren Strukturelements nach Anspruch 6, wobei die Verstärkungsgewebe (20a, 20b) vor der Anbringung der zweiten Filme (30a, 30b) punktweise an die Bewehrungsdrähte (40) angeschlossen werden.

8. Verfahren zur Herstellung eines aufblasbaren Strukturelements nach einem der Ansprüche 5 bis 7, wobei das Material des festen Kerns ein wasserlöslicher Schaumstoff ist.

9. Verfahren zur Herstellung eines aufblasbaren Strukturelements nach Anspruch 8, wobei das Material des festen Kerns ein Schaumstoff auf der Basis von Stärke ist.

10. Verfahren zur Herstellung eines aufblasbaren Strukturelements nach einem der Ansprüche 1 bis 4, wobei das Verfahren umfasst: einen Schritt der Aufbringung erster Filme (10a, 10b) beiderseits eines Systems von Kämmen (101, 102), einen Schritt der Aufbringung eines Verstärkungsgewebes (20a, 20b) mit beabstandeten Maschen auf die Außenseiten der ersten Filme; einen Schritt der Anbringung von zweiten Filmen (30a, 30b) und ihrer Verklebung mit den ersten Filmen durch die Verstärkungsgewebe hindurch, um die Dichtigkeit der Haut sicherzustellen; einen Schritt des Herausziehens des Systems von Kämmen durch Zurückziehen der Kämme zueinander hin und anschließend parallel zu den Filmen.

11. Verfahren zur Herstellung eines aufblasbaren Strukturelements, wobei die zwei dichten Häute (1a, 1b) durch das Strukturelement versteifende Bewehrungsdrähte (40) miteinander verbunden sind, nach Anspruch 10, welches einen Schritt des Heftens eines Bewehrungsdrahtes (40) durch die von den zwei ersten Filmen (10a, 10b) und die Kämme gebildete Anordnung hindurch aufweist, wobei der Schritt des Herausziehens des Systems von Kämmen ohne Zerstörung der Bewehrungsdrähte durchgeführt wird.

12. Verfahren zur Herstellung eines aufblasbaren Strukturelements nach Anspruch 11, wobei die Verstärkungsgewebe (20a, 20b) vor der Anbringung der zweiten Filme (30a, 30b) punktweise an die Bewehrungsdrähte (40) angeschlossen werden.

13. Verfahren zur Herstellung eines aufblasbaren Strukturelements nach einem der Ansprüche 10 bis 12, welches nach dem Heften einen Schritt des Entfernens der Filme voneinander mittels des Systems von Kämmen umfasst.

14. Verfahren zur Herstellung eines aufblasbaren Strukturelements nach einem der Ansprüche 10 bis 13, welches vor Heften einen Schritt des Entfernens der Filme voneinander mittels des Systems von Kämmen umfasst.

## Claims

1. Inflatable structural element (100) such as an inflatable beam, having two multilayer sealed skins that each comprise a first polymer film (10a, 10b), a reinforcing fabric (20a, 20b) disposed on the first polymer film (10a, 10b) and a second polymer film (30a, 30b) disposed on the reinforcing fabric (20a, 20b) and stuck by means of an adhesive or by heating-welding to the first polymer film (10a, 10b) through voids in the reinforcing fabric (20a, 20b), wherein said skins are spaced apart so as to form the external walls of the structural element, wherein the first film (10a, 10b) of each of the skins forms an internal face of the external wall of the structural element and the second film (30a, 30b) of each of the skins forms an external face of said wall.

2. Inflatable structural element according to Claim 1, wherein the two sealed skins (1a, 1b) are joined together by reinforcing threads (40) that stiffen the structural element.

3. Inflatable structural element according to Claim 2, wherein the reinforcing threads (40) join the first films (10a, 10b) of the two skins by means of a stitching operation, the reinforcing fabrics of the skins covering the loops of the threads (41a, 41b) on the external face of the first films (10a, 10b).

4. Inflatable structural element according to Claim 3, wherein the second films (30a, 30b) of the skins are stuck to the first films (10a, 10b) through voids between the meshes of the reinforcing fabrics (20a, 20b), the stitching loops being embedded in the adhesive between the first and second films.

5. Method for producing an inflatable structural element according to any one of Claims 1 to 4, the method comprising: a step of laying first films (10a, 10b) on either side of a removable solid core (50) between the two films; a step of laying reinforcing fabrics (20a, 20b) having spaced-apart meshes on the external faces of the first films; a step of placing second films (30a, 30b) on and sticking them to the first films through the reinforcing fabrics, in order to ensure the sealing of the skin; a step of removing the solid core (50).

6. Method for producing an inflatable structural element, wherein the two sealed skins (1a, 1b) are joined together by reinforcing threads (40) that stiffen the structural element, according to Claim 5, having a step of stitching a reinforcing thread (40) through the assembly formed by the two first films (10a, 10b) and the solid core (50) between the step of laying the first films and the layer of laying the reinforcing fabrics, the step of removing the solid core being effected without destroying the reinforcing threads.

7. Method for producing an inflatable structural element according to Claim 6, wherein the reinforcing fabrics (20a, 20b) are connected in a pointwise manner to the reinforcing threads (40) before the second films (30a, 30b) are laid.

8. Method for producing an inflatable structural element according to any one of Claims 5 to 7, wherein the material of the solid core is a water-soluble foam.

9. Method for producing an inflatable structural element according to Claim 8, wherein the material of the solid core is a starch-based foam.

10. Method for producing an inflatable structural element according to any one of Claims 1 to 4, the method comprising: a step of laying first films (10a, 10b) on either side of a system of combs (101, 102); a step of laying a reinforcing fabric (20a, 20b) having spaced-apart meshes on the external faces of the first films; a step of placing second films (30a, 30b) on and sticking them to the first films through the reinforcing fabrics, in order to ensure the sealing of the skin; a step of removing the system of combs by retracting the combs towards one another and then parallel to the films.

11. Method for producing an inflatable structural element, wherein the two sealed skins (1a, 1b) are joined together by reinforcing threads (40) that stiffen the structural element, according to Claim 10, having a step of stitching a reinforcing thread (40) through the assembly formed by the two first films (10a, 10b) and the combs; the step of extracting the system of combs being effected without destroying the reinforcing threads.

12. Method for producing an inflatable structural element according to Claim 11, wherein the reinforcing fabrics (20a, 20b) are connected in a pointwise manner to the reinforcing threads (40) before the second films (30a, 30b) are laid.

13. Method for producing an inflatable structural element according to any one of Claims 10 to 12, comprising, after stitching, a step of spacing the films apart from one another by means of the system of combs.

14. Method for producing an inflatable structural element according to any one of Claims 10 to 13, comprising, before stitching, a step of spacing the films apart from one another by means of the system of combs.
